# EUROPEAN PATENT APPLICATION

(11) **EP 3 677 508 A1**
(43) Date of publication of application: **08.07.2020**
(21) Application number: 19208895.3
(22) Date of filing: 13.11.2019
(51) Int. Cl.: B64D 13/06, F01D 5/04

(54) **CONCENTRIC TURBINE CONDENSING CYCLE**

(30) Priority: 03.01.2019 US 201916238640
(71) Applicant: Hamilton Sundstrand Corporation, Charlotte, NC 28217-4578 (US)
(72) Inventor: DeFrancesco, Gregory L., Simsbury, CT Connecticut 06070 (US); Army, Donald E., Enfield, CT Connecticut 06082 (US); Lokhandwalla, Murtuza, South Windsor, CT Connecticut 06074 (US)
(74) Representative: Dehns

(57) **Abstract**

A dual concentric turbine system for use in an air cycle environmental control system including: a shaft (23) configured to rotate around a rotational axis of the shaft; a first turbine (24) attached to the shaft; a second turbine (26) attached to the shaft and concentric to the first turbine; and an integral shroud (120) attached to the shaft, the integral shroud being radially interposed between the first turbine and the second turbine, wherein the first turbine, the second turbine, and the integral shroud are configured to rotate with the shaft around the rotational axis of the shaft.

## Description

### BACKGROUND

The subject matter disclosed herein generally relates to environmental control systems and, more particularly, to air cycle machines of environmental control systems.

Aircraft are conventionally equipped with environmental control system architectures that include a first turbine and a second turbine that are arranged in line with one another sequentially along a rotational axis of a drive shaft of the environmental control system. The sequential arrangement of the first turbine and the second turbine often lengthen the configuration of the environmental control system along the drive shaft, thus smaller configurations of environmental control system architectures are desired.

### BRIEF SUMMARY

According to one embodiment, a turbine system for use in an air cycle environmental control system is provided. The turbine system including: a shaft configured to rotate around a rotational axis of the shaft; a first turbine attached to the shaft; a second turbine attached to the shaft and concentric to the first turbine; and an integral shroud attached to the shaft, the integral shroud being radially interposed between the first turbine and the second turbine, wherein the first turbine, the second turbine, and the integral shroud are configured to rotate with the shaft around the rotational axis of the shaft.

In addition to one or more of the features described above, or as an alternative, further embodiments may include that the first turbine is located radially inward of the second turbine.

In addition to one or more of the features described above, or as an alternative, further embodiments may include that the second turbine is located radially inward of the first turbine.

In addition to one or more of the features described above, or as an alternative, further embodiments may include that the integral shroud fluidly separates the first turbine and the second turbine

In addition to one or more of the features described above, or as an alternative, further embodiments may include: a hub attached to the shaft, wherein the first turbine, the second turbine, and the integral shroud are attached to the shaft through the hub.

In addition to one or more of the features described above, or as an alternative, further embodiments may include: a first turbine outlet passage fluidly connected to the first turbine.

In addition to one or more of the features described above, or as an alternative, further embodiments may include: a second turbine outlet passage fluidly connected to the second turbine.

In addition to one or more of the features described above, or as an alternative, further embodiments may include: a second turbine outlet passage fluidly connected to the second turbine, an outlet passage separation wall fluidly separating the second turbine outlet passage and the first turbine outlet passage.

In addition to one or more of the features described above, or as an alternative, further embodiments may include: an outlet rotational seal configured to seal the integral shroud against the outlet passage separation wall.

According to another embodiment, an air cycle environmental control system is provided. The air cycle environmental control system including: a first turbine inlet passage; a second turbine inlet passage; and a turbine system including: a shaft configure to rotate around a rotational axis of the shaft; a first turbine attached to the shaft, the first turbine being fluidly connected to the first turbine inlet passage; a second turbine attached to the shaft and concentric to the first turbine, the second turbine being fluidly connected to the second turbine inlet passage; and an integral shroud attached to the shaft, the integral shroud being radially interposed between the first turbine and the second turbine, wherein the first turbine, the second turbine, and the integral shroud are configured to rotate with the shaft around the rotational axis of the shaft.

In addition to one or more of the features described above, or as an alternative, further embodiments may include that the first turbine is located radially inward of the second turbine.

In addition to one or more of the features described above, or as an alternative, further embodiments may include that the second turbine is located radially inward of the first turbine.

In addition to one or more of the features described above, or as an alternative, further embodiments may include that the integral shroud fluidly separates the first turbine and the second turbine

In addition to one or more of the features described above, or as an alternative, further embodiments may include that the turbine system further includes: a hub attached to the shaft, wherein the first turbine, the second turbine, and the integral shroud are attached to the shaft through the hub.

In addition to one or more of the features described above, or as an alternative, further embodiments may include that the turbine system further includes: a first turbine outlet passage fluidly connected to the first turbine.

In addition to one or more of the features described above, or as an alternative, further embodiments may include that the turbine system further includes: a second turbine outlet passage fluidly connected to the second turbine.

In addition to one or more of the features described above, or as an alternative, further embodiments may include that the turbine system further includes: a second turbine outlet passage fluidly connected to the second turbine, an outlet passage separation wall fluidly separating the second turbine outlet passage and the first turbine outlet passage.

In addition to one or more of the features described above, or as an alternative, further embodiments may include that the turbine system further includes: an outlet rotational seal configured to seal the integral shroud against the outlet passage separation wall.

In addition to one or more of the features described above, or as an alternative, further embodiments may include: an inlet passage separation wall fluidly separating the second turbine inlet passage and the first turbine inlet passage.

According to another embodiment, a method of operating an air cycle environmental control system is provided. The method including: rotating a first turbine about a rotation axis of a shaft, the first turbine being attached to the shaft; rotating a second turbine about the rotation axis of the shaft, the second turbine being attached to the shaft and concentric to the first turbine; and rotating an integral shroud about the rotation axis of the shaft, the integral shroud being attached to the shaft and radially interposed between the first turbine and the second turbine.

Technical effects of embodiments of the present disclosure include an air cycle environmental control system employing a two-stage turbine with the stages being concentric to one another.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 is an air cycle environmental control system employing a two-stage turbine;
FIG. 2 is an air cycle environmental control system with a dual concentric turbine system, according to an embodiment of the present disclosure;
FIG. 3 is a dual concentric turbine system of FIG. 2, according to an embodiment of the present disclosure;
FIG. 4 is an air cycle environmental control system with a dual concentric turbine system, according to an embodiment of the present disclosure; and
FIG. 5 is a dual concentric turbine system of FIG. 4, according to an embodiment of the present disclosure.

### DETAILED DESCRIPTION

A detailed description of one or more embodiments of the disclosed apparatus and method are presented herein by way of exemplification and not limitation with reference to the Figures.

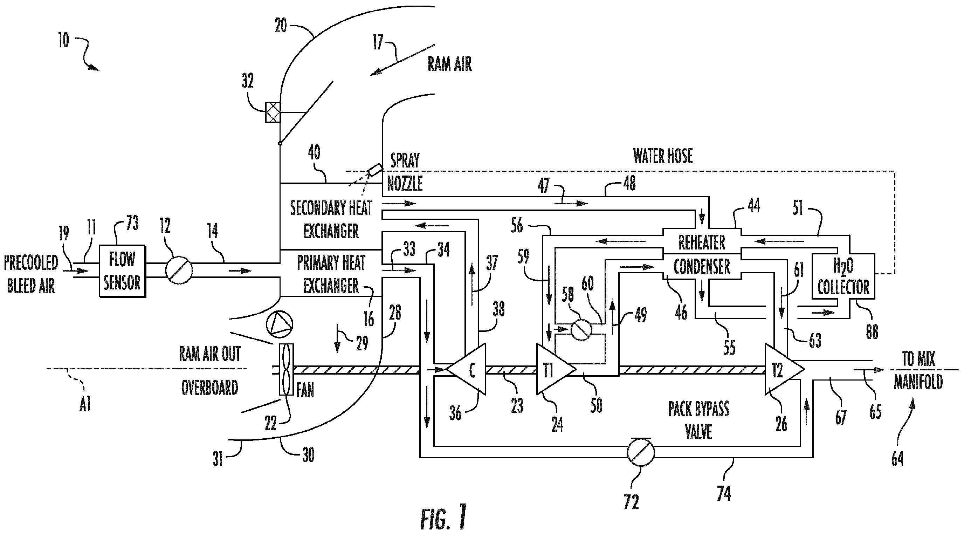

Referring now to FIG. 1, a block diagram of an air cycle environmental control system 10 having a first turbine 24 and a second turbine 26 that are arranged in line with one another sequentially along a rotational axis A1 of a drive shaft 23 of the air cycle environmental control system 10 is illustrated. A compressed ambient supply air 19 enters the air cycle environmental control system 10 via a passage 11. The source of this air (not shown) may be either an auxiliary power unit, the compressor section of a gas turbine engine, a mechanical shaft, electric motor-driven compressor or a combination thereof. The flow rate of compressed air entering the air cycle environmental control system 10 is regulated by a valve 12 connected by a passage 14 to a warm path of a primary heat exchanger 16. To cool air in this warm path, relatively cool external ambient air 17 flows into an opening at the exterior of the aircraft (not shown) and through a cooling path. The ambient air 17 may be ram air. To maintain sufficient flow through this cooling path during low airspeed operation, a fan 22, driven by a pair of turbines 24, 26 via a shaft 23, connects to the outlet 31 of the cooling path via a passage 28, drawing warmed external ambient air 29 through the path and exhausting it from the aircraft via a fan exhaust passage 30 through the outlet 31. A valve 32 in the cooling path 20 may be modulated to regulate the cooling flow rate.

Following cooling in the warm path of the primary heat exchanger 16, primary heat exchanger outlet air 33 flows through a passage 34 to a compressor 36, also driven by the two turbines 24, 26. Compressor outlet air 37, heated by this compression step, subsequently passes via a passage 38 to a warm path of a secondary heat exchanger 40, where it is cooled by the external ambient air 17 flowing through a cooling path, similar to the aforementioned cooling means of the primary heat exchanger 16.

Secondary heat exchanger outlet air 47 exiting the warm path of the secondary heat exchanger 40 subsequently flows via a passage 48 across a reheater 44 and condenser 46. The temperature of the heat transfer surface within this reheater 44 is maintained at or below the desired dew point of the secondary heat exchanger outlet air 47. This dehumidifies the secondary heat exchanger outlet air 47 before it flows to the first turbine 24 via a first turbine inlet passage 56. The secondary heat exchanger outlet air 47 from passage 48 does not mix with the interior of the reheater 44 or the condenser 46, but instead passes to a passage 55 through a water collector 88 and back through a passage 51 through the reheater 44. Notably, the turbines 24, 26 drive the compressor 26 and fan 22. The fan 22 is optional and may not be necessary.

The first turbine inlet air 59 downstream of the reheater 44 passes into a first turbine inlet passage 56, and across a first turbine 24. Cooled by expansion in the first turbine 24, the first turbine outlet air 49 flows to a cooling path of the condenser 46 via a first turbine outlet passage 50, chilling the heat transfer surfaces and absorbing the heat of vaporization of the condensed water vapor. The expansion ratio of the first turbine 24 is therefore chosen to maintain a first turbine outlet air 49 temperature high enough to avoid icing, given the mass flow rate through the system, within the coolant path of the condenser 46. In most applications, the desired temperature of the first turbine outlet air 49 is between 35 and 40 degrees Fahrenheit (1.7 to 4.4 degrees Celsius). Should the actual first turbine outlet temperature fall below the desired point, or if by some means the presence of ice is sensed in the condenser 46, a valve 58 opens to allow dehumidified first turbine inlet air 59 to pass through a passage 60 and mix with and warm the first turbine outlet air 49.

Downstream of the first turbine 24 the air passes into a first turbine outlet passage 50, and through the condenser 46. As secondary heat exchanger outlet air 47 passes through the condensing path of the condenser 46, the heat of vaporization of any water vapor mixed with it is recovered, upon condensation, by the first turbine outlet air 49 in the cooling path. The total recoverable energy stored in the condenser cooling path outlet air 61 is therefore the sum of this recovered heat of vaporization and any energy not recovered by the first turbine 24. To recover this energy, the condenser cooling path outlet air 61 passes through a second turbine inlet passage 63 and expands in the second turbine 26. Downstream of the condenser 46 the air passes into a second turbine inlet passage 63, and across a second turbine 26 before exiting through a second turbine outlet passage 67. To moderate the volume and temperature of the airflow passing into an aircraft cabin, the second turbine outlet air 65 passes into a mixer 64 where it is combined with recirculated cabin air.

The system according to the present disclosure is also able to accommodate changes in ambient and operating conditions which would otherwise reduce overall system operability and efficiency. Should pressure of the compressed ambient air 19 be too low, mass flow, sensed, for example, by a hot wire anemometer 73, drops below the level necessary to satisfy cabin fresh air flow requirements. A pack bypass valve 72 then opens, allowing flow to bypass both the condenser 46 and the first turbine 24, circulating, through a passage 74, secondary heat exchanger outlet air 47 directly to the second turbine 26 outlet. The primary bypass valve 72 typically opens when the aircraft is at the high altitudes encountered at cruise, when the external ambient air 17, and therefore the supply air 19, are low in pressure and humidity The expansion ratios and nozzle sizes of both turbines 24, 26 have been selected to optimize system performance in the higher pressure ambient air found at lower altitudes where humidity is a concern.

The second turbine 26 is designed to expand air previously expanded by the first turbine 24, and therefore has a larger nozzle far less restrictive to flow than the first turbine nozzle. Flow passing directly to the second turbine 26 is therefore much less restricted than flow passing first to the condenser 46 and first turbine 24. By decreasing restriction to flow, greater volume flow rates may be sustained during periods when supply air pressure is low, allowing a sufficient mass flow rate of air to enter the cabin.

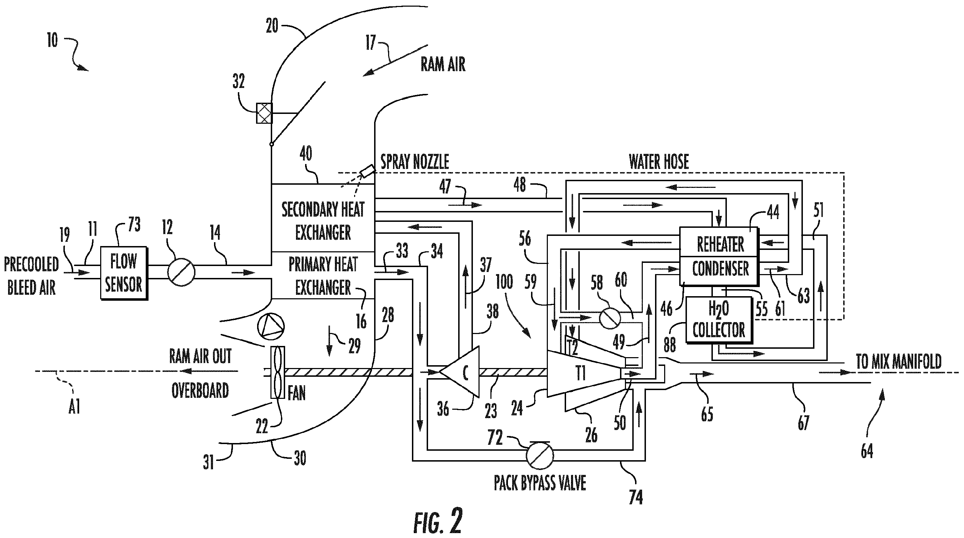

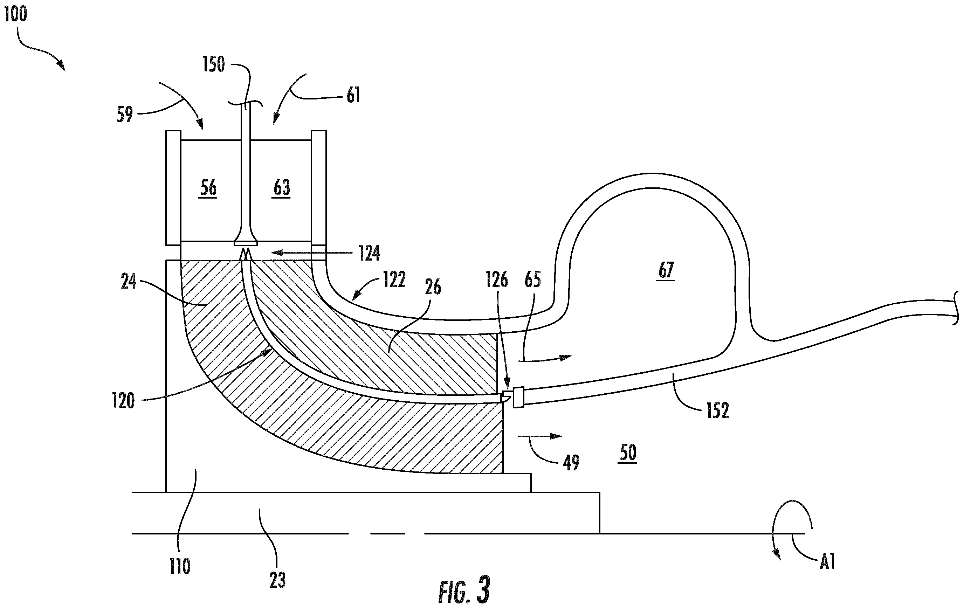

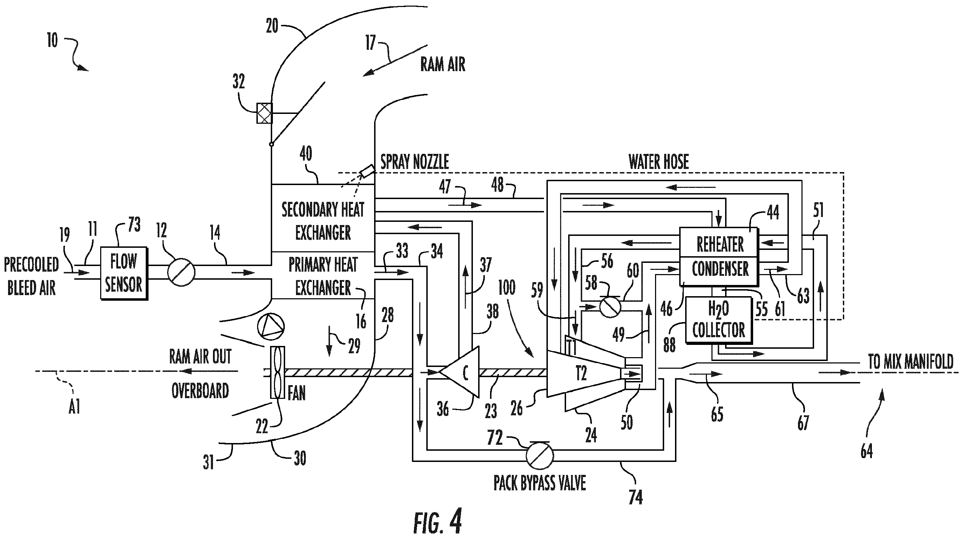

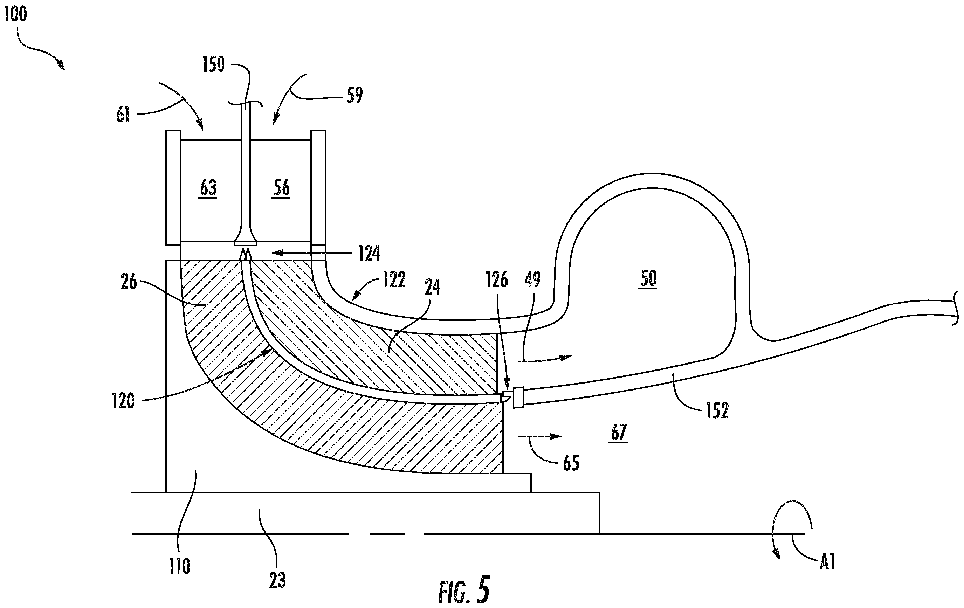

Referring now to FIGs. 2-5, a block diagram of an air cycle environmental control system 10 having a dual concentric turbine system 100 is illustrated in FIGs. 2 and 4 and an enlarged cross-sectional view of the dual concentric turbine system 100 is illustrated in FIGs. 3 and 5. A compressed ambient supply air 19 enters the air cycle environmental control system 10 via a passage 11. The source of this air (not shown) may be either an auxiliary power unit, the compressor section of a gas turbine engine, a mechanical shaft, electric motor-driven compressor or combinations thereof. The flow rate of compressed air entering the air cycle environmental control system 10 is regulated by a valve 12 connected by a passage 14 to a warm path of a primary heat exchanger 16. To cool air in this warm path, relatively cool external ambient air 17 flows into an opening at the exterior of the aircraft (not shown) and through a cooling path 20. The ambient air 17 may be ram air. To maintain sufficient flow through this cooling path during low airspeed operation, a fan 22, driven by a pair of concentric turbines 24, 26 via a shaft 23, connects to the outlet 31 of the cooling path via a passage 28, drawing warmed external ambient air 29 through the path and exhausting it from the aircraft via a fan exhaust passage 30 through the outlet 31. A valve 32 in cooling path 20 may be modulated to regulate the cooling flow rate.

Following cooling in the warm path of the primary heat exchanger 16, primary heat exchanger outlet air 33 flows through a passage 34 to a compressor 36, also driven by the two concentric turbines 24, 26. Compressor outlet air 37, heated by this compression step, subsequently passes via a passage 38 to a warm path of a secondary heat exchanger 40, where it is cooled by the external ambient air 17 flowing through a cooling path, similar to the aforementioned cooling means of the primary heat exchanger 16.

Secondary heat exchanger outlet air 47 exiting the warm path of the secondary heat exchanger 40 subsequently flows via a passage 48 across a reheater 44 and condenser 46. The temperature of the heat transfer surface within this reheater 44 is maintained at or below the desired dew point of the secondary heat exchanger outlet air 47. This dehumidifies the secondary heat exchanger outlet air 47 before it flows to the first turbine 24 via a first turbine inlet passage 56. The secondary heat exchanger outlet air 47 from passage 48 does not mix with the interior of the reheater 44 or the condenser 46, but instead passes to a passage 55 through a water collector 88 and back through a passage 51 through the reheater 44. Notably, the concentric turbines 24, 26 drive the compressor 26 and fan 22. The fan 22 is optional and may not be necessary.

The first turbine inlet air 59 downstream of the reheater 44 passes into a first turbine inlet passage 56, and across a first turbine 24. Cooled by expansion in the first turbine 24, the first turbine outlet air 49 flows to a cooling path of the condenser 46 via a first turbine outlet passage 50, chilling the heat transfer surfaces and absorbing the heat of vaporization of the condensed water vapor. The expansion ratio of the first turbine 24 is therefore chosen to maintain a first turbine outlet air 49 temperature high enough to avoid icing, given the mass flow rate through the system, within the coolant path of the condenser 46. In most applications, the desired temperature of the first turbine outlet air 49 is between 35 and 40 degrees Fahrenheit (1.7 to 4.4 degrees Celsius). Should the actual first turbine outlet temperature fall below the desired point, or if by some means the presence of ice is sensed in the condenser 46, a valve 58 opens to allow dehumidified first turbine inlet air 59 to pass through a passage 60 and mix with and warm the first turbine outlet air 49.

Downstream of the first turbine 24 the air passes into a first turbine outlet passage 50, and through the condenser 46. As secondary heat exchanger outlet air 47 passes through the condensing path of the condenser 46, the heat of vaporization of any water vapor mixed with it is recovered, upon condensation, by the first turbine outlet air 49 in the cooling path. The total recoverable energy stored in the condenser cooling path outlet air 61 is therefore the sum of this recovered heat of vaporization and any energy not recovered by the first turbine 24. To recover this energy, the condenser cooling path outlet air 61 passes through a second turbine inlet passage 63 and expands in the second turbine 26. Downstream of the condenser 46 the air passes into a second turbine inlet passage 63, and across a second turbine 26 before exiting through a second turbine outlet passage 67. To moderate the volume and temperature of the airflow passing into an aircraft cabin, the second turbine outlet air 65 passes into a mixer 64 where it is combined with recirculated cabin air.

The system according to the present disclosure is also able to accommodate changes in ambient and operating conditions which would otherwise reduce overall system operability and efficiency. Should pressure of the compressed ambient air 19 be too low, mass flow, sensed, for example, by a hot wire anemometer 73, drops below the level necessary to satisfy cabin fresh air flow requirements. A pack bypass valve 72 then opens, allowing flow to bypass both the condenser 46 and the first turbine 24, circulating, through a passage 74, secondary heat exchanger outlet air 47 directly to the second turbine 26 outlet. The primary bypass valve 72 typically opens when the aircraft is at the high altitudes encountered at cruise, when the external ambient air 17, and therefore the supply air 19, are low in pressure and humidity The expansion ratios and nozzle sizes of both turbines 24, 26 have been selected to optimize system performance in the higher pressure ambient air found at lower altitudes where humidity is a concern.

The second turbine 26 is designed to expand air previously expanded by the first turbine 24, and therefore has a larger nozzle far less restrictive to flow than the first turbine nozzle. Flow passing directly to the second turbine 26 is therefore much less restricted than flow passing first to the condenser 46 and first turbine 24. By decreasing restriction to flow, greater volume flow rates may be sustained during periods when supply air pressure is low, allowing a sufficient mass flow rate of air to enter the cabin.

As shown in FIGs. 2-5, the dual concentric turbine system 100 includes turbines 24, 26 may be arranged in a concentric arrangement, such that the dual concentric turbine system 100 includes a first turbine 24 and a second turbine 26 concentric to the first turbine 24. Advantageously, concentric arrangement of the turbines 24, 26 allows the air cycle environmental control system 10 shown in FIGs. 2 and 4 to be shorter in length and more compact than the air cycle environmental control system 10 shown in FIG. 1. The compact nature of this design allows for more efficient packaging, a reduction in weight, a potential for cost reduction due to a reduction in the number of parts, and a potential increase in the thermodynamic efficiency of the inner turbine due to an elimination of the gap (i.e., tip clearance) between a rotating and a static part. Also advantageously, the shorter shaft is expected to benefit air cycle machine critical speed to reduce the risk rotative assembly vibration responses during operation.

As shown in FIGs. 2 and 3, the first turbine 24 may be located radially inward of the second turbine 26. The second turbine 26 is attached to the first turbine 24 via an integral shroud 120. The integral shroud 120 fluidly separates the first turbine 24 from the second turbine 26. The integral shroud 120 is radially interposed between the first turbine 24 and the second turbine 26. A fixed shroud 122 is located radially outward from the second turbine 26, as shown in FIG. 3. The first turbine 24 is attached to a hub 110. The hub 110 is attached to the driveshaft 23, thus as the drive shaft 23 rotates around a rotational axis A1, the hub 110, the first turbine 24, the integral shroud 120, and the second turbine 26 rotate with the drive shaft 23. The first turbine 24 is fluidly connected to the first turbine inlet passage 56 and receives dehumidified first turbine inlet air 59 from the reheater 44. The second turbine 26 is fluidly connected to the second turbine inlet passage 63 and receives condenser cooling path outlet air 61 from the condenser 46. The second turbine inlet passage 63 and the first turbine inlet passage 56 may be fluidly separated by an inlet passage separation wall 150.

The passages 56, 63 remain stationary while the turbines 24, 26 rotate, and an inlet rotational seal 124 is interposed between the turbines 24, 26 and the passages 56, 63. In embodiment, the rotational seal 124 may be a labyrinth seal. The inlet rotational seal 124 fluidly separates the first turbine 24 and the second turbine 26. The inlet rotational seal 124 seals the integral shroud 120 against the inlet passage separation wall 150. The integral shroud 120 rotates relative to the inlet passage separation wall 150, which remains stationary.

The first turbine 24 is fluidly connected to the first turbine outlet passage 50 and expels first turbine outlet air 49 into the first turbine outlet passage 50. The second turbine 26 is fluidly connected to the second turbine outlet passage 67 and expels second turbine outlet air 65 into second turbine outlet passage 67. The first turbine outlet passage 50 and the second turbine outlet passage 67 may be fluidly separated by an outlet passage separation wall 152.

The passages 50, 67 remain stationary while the turbines 24, 26 rotate and an outlet rotational seal 126 is interposed between the turbines 24, 26 and the passages 56, 63. The outlet rotational seal 126 fluidly separates the first turbine 24 and the second turbine 26. The outlet rotational seal 126 seals the integral shroud 120 against the outlet passage separation wall 152. The integral shroud 120 rotates relative to the outlet passage separation wall 152, which remains stationary.

As shown in FIGs. 4 and 5, the second turbine 26 may be located radially inward of the first turbine 24. The first turbine 24 is attached to the second turbine 26 via an integral shroud 120. The integral shroud 120 fluidly separates the first turbine 24 from the second turbine 26. The integral shroud 120 is radially interposed between the first turbine 24 and the second turbine 26. A fixed shroud 122 is located radially outward from the first turbine 24, as shown in FIG. 5. The second turbine 26 is attached to a hub 110. The hub 110 is attached to the driveshaft 23, thus as the drive shaft 23 rotates around a rotational axis A1, the hub 110, the second turbine 26, the integral shroud 120, and the first turbine 24 rotate with the drive shaft 23. The first turbine 24 is fluidly connected to the first turbine inlet passage 56 and receives dehumidified first turbine inlet air 59 from the reheater 44. The second turbine 26 is fluidly connected to the second turbine inlet passage 63 and receives condenser cooling path outlet air 61 from the condenser 46. The second turbine inlet passage 63 and the first turbine inlet passage 56 may be fluidly separated by an inlet passage separation wall 150.

The passages 56, 63 remain stationary while the turbines 24, 26 rotate and an inlet rotational seal 124 is interposed between the turbines 24, 26 and the passages 56, 63. The inlet rotational seal 124 fluidly separates the first turbine 24 and the second turbine 26. The inlet rotational seal 124 seals the integral shroud 120 against the inlet passage separation wall 150. The integral shroud 120 rotates relative to the inlet passage separation wall 150, which remains stationary.

The first turbine 24 is fluidly connected to the first turbine outlet passage 50 and expels first turbine outlet air 49 into the first turbine outlet passage 50. The second turbine 26 is fluidly connected to the second turbine outlet passage 67 and expels second turbine outlet air 65 into second turbine outlet passage 67. The first turbine outlet passage 50 and the second turbine outlet passage 67 may be fluidly separated by an outlet passage separation wall 152.

The passages 50, 67 remain stationary while the turbines 24, 26 rotate and an outlet rotational seal 126 is interposed between the turbines 24, 26 and the passages 56, 63. The outlet rotational seal 126 fluidly separates the first turbine 24 and the second turbine 26. The outlet rotational seal 126 seals the integral shroud 120 against the outlet passage separation wall 152. The integral shroud 120 rotates relative to the outlet passage separation wall 152, which remains stationary.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the invention as defined by the claims. In addition, many modifications may be made to adapt a particular situation or material to the teachings of the present disclosure without departing from the scope of the invention. Therefore, it is intended that the present disclosure not be limited to the particular embodiment disclosed as the best mode contemplated for carrying out this present disclosure, but that the present disclosure will include all embodiments falling within the scope of the claims.

## Claims

1. A turbine system for use in an air cycle environmental control system, comprising:
a shaft (23) configured to rotate around a rotational axis of the shaft;
a first turbine (24) attached to the shaft;
a second turbine (26) attached to the shaft and concentric to the first turbine; and
an integral shroud (120) attached to the shaft, the integral shroud being radially interposed between the first turbine and the second turbine,
wherein the first turbine, the second turbine, and the integral shroud are configured to rotate with the shaft around the rotational axis of the shaft.

2. The turbine system of claim 1, wherein the first turbine is located radially inward of the second turbine.

3. The turbine system of claim 1, wherein the second turbine is located radially inward of the first turbine.

4. The turbine system of claim 1, 2 or 3, wherein the integral shroud fluidly separates the first turbine and the second turbine

5. The turbine system of any preceding claim, further comprising:
a hub (110) attached to the shaft,
wherein the first turbine, the second turbine, and the integral shroud are attached to the shaft through the hub.

6. The turbine system of any preceding claim, further comprising:
a first turbine outlet passage (50) fluidly connected to the first turbine.

7. The turbine system of any preceding claim, further comprising:
a second turbine outlet passage (67) fluidly connected to the second turbine.

8. The turbine system of claim 6, further comprising:
a second turbine outlet passage (67) fluidly connected to the second turbine,
an outlet passage separation wall (152) fluidly separating the second turbine outlet passage and the first turbine outlet passage.

9. The turbine system of claim 8, further comprising:
an outlet rotational seal (126) configured to seal the integral shroud against the outlet passage separation wall.

10. An air cycle environmental control system, comprising:
a first turbine inlet passage (56);
a second turbine inlet passage (63); and
a turbine system (100) as claimed in any preceding claim,
the first turbine being fluidly connected to the first turbine inlet passage; and
the second turbine being fluidly connected to the second turbine inlet passage.

11. The air cycle environmental control system of claim 10, further comprising:
an inlet passage separation wall (150) fluidly separating the second turbine inlet passage and the first turbine inlet passage.

12. A method of operating an air cycle environmental control system, comprising:
rotating a first turbine about a rotation axis of a shaft, the first turbine being attached to the shaft;
rotating a second turbine about the rotation axis of the shaft, the second turbine being attached to the shaft and concentric to the first turbine; and
rotating an integral shroud about the rotation axis of the shaft, the integral shroud being attached to the shaft and radially interposed between the first turbine and the second turbine.
